# EUROPEAN PATENT APPLICATION

(11) **EP 4 703 118 A1**
(43) Date of publication of application: **04.03.2026**
(21) Application number: 25199113.9
(22) Date of filing: 29.08.2025
(51) Int. Cl.: B29C 45/03, B29C 45/06, B29C 45/07, B29C 45/64, B29C 45/80

(54) **INJECTION MOLDING MACHINE AND METHOD OF CONTROLLING THE SAME**

(30) Priority: 30.08.2024 JP 2024150037
(71) Applicant: Toyo Innovex Co., Ltd., Akashi-shi, Hyogo (JP)
(72) Inventor: TARUYA, Koji, Akashi-shi, Hyogo (JP); SAKAKIBARA, Masato, Akashi-shi, Hyogo (JP); SHIMOTANI, Sachiko, Akashi-shi, Hyogo (JP)
(74) Representative: Pintz, György

(57) **Abstract**

In molding operation, a control device causes an injection device (20) to move forward toward a target position where a nozzle (21a) is in contact with a movable-side mold (4). When the injection device (20) moves forward to a determination position at the rear of the target position, (i) if a fixed-side mold (3) and the movable-side mold (4) are closed, the control device causes the injection device (20) to move further forward to the target position and, (ii) if the fixed-side mold (3) and the movable-side mold (4) are not closed, the control device stops forward movement of the injection device (20) and causes the injection device (20) to move further forward to the target position after the fixed-side mold (3) and the movable-side mold (4) are closed.

## Description

### BACKGROUND OF THE INVENTION

### Field of the Invention

The present invention relates to an injection molding machine and a method of controlling the same.

### Description of the Related Art

PTL 1 discloses an example of injection molding machines in the past. Such an injection molding machine causes an injection unit to move forward so as to complete nozzle touch at the same time as completion of clamping based on a clamping time and an injection unit backward movement time, the clamping time being from start of mold closing until completion of clamping. This causes the clamping operation to be performed in parallel with injection unit forward movement operation and thus allows reduction in molding cycle.

PTL 1 refers to JP 2013-006332 A.

### SUMMARY OF THE INVENTION

The injection molding machine described above has a possibility of nozzle touch before completion of clamping due to, for example, expansion of a mold and a die plate by heating and the like, causing a risk of breaking the mold or the injection unit.

In view of such a circumstance, one or more embodiments of the present disclosure provide an injection molding machine and a method of controlling an injection molding machine that allow reduction in molding cycle and allow more secure inhibition of nozzle touch before closing molds.

An injection molding machine according to an embodiment of the present invention includes:
a clamping device configured to clamp a first mold and a second mold;
an injection device having a cylinder provided with a nozzle to be in contact with or separate from at least one mold of the first mold or the second mold; and
a control device configured to control the clamping device and the injection device, wherein the control device, in molding operation,
causes the injection device to move forward toward a target position where the nozzle is in contact with the mold,
determines whether the first mold and the second mold are closed when the injection device moves forward to a determination position at rear of the target position, and,
   (i) if the first mold and the second mold are closed, causes the injection device to move further forward to the target position and,
   (ii) if the first mold and the second mold are not closed, stops forward movement of the injection device and causes the injection device to move further forward to the target position after the first mold and the second mold are closed.

A method of controlling an injection molding machine according to another embodiment of the present invention, the injection molding machine having a clamping device configured to clamp a first mold and a second mold and an injection device having a cylinder provided with a nozzle to be in contact with or separate from at least one mold of the first mold or the second mold, wherein the method comprises, in molding operation,
causing the injection device to move forward toward a target position where the nozzle is in contact with the mold, and
when the injection device moves forward to a determination position at rear of the target position,
   (i) if the first mold and the second mold are closed, causing the injection device to move further forward to the target position and,
   (ii) if the first mold and the second mold are not closed, stopping forward movement of the injection device and causing the injection device to move further forward to the target position after the first mold and the second mold are closed.

The present invention causes the injection device to move forward to the target position if the first mold and the second mold are closed at some point during forward movement of the injection device toward the target position where the nozzle is in contact with at least one mold of the first mold or the second mold, and if the molds are not closed, waits until the first mold and the second mold are closed and then causes the injection device to move forward to the target position. Such a configuration allows inhibition of the nozzle to be in contact with the mold before the first mold and the second mold are closed while operation of closing the first mold and the second mold is performed in parallel with operation of moving the injection device forward. It is thus possible to reduce the molding cycle and also to more securely inhibit nozzle touch before the first mold and the second mold are closed.

### BRIEF DESCRIPTION OF THE DRAWINGS

FIG. 1 is a front view of a molding system according to a first embodiment of the present invention.
FIG. 2 is a plan view of the molding system in FIG. 1.
FIG. 3 is a cross-sectional view of a clamping device and its neighborhood of the molding system in FIG. 1 (in a state where a fixed-side mold and a movable-side mold are open).
FIG. 4 is a cross-sectional view of the clamping device and its neighborhood of the molding system in FIG. 1 (in a state where the fixed-side mold and the movable-side mold are closed).
FIG. 5 is a functional block diagram of the molding system in FIG. 1.
FIG. 6 is a diagram illustrating operation of the molding system in FIG. 1 (Operation Example 1).
FIG. 7 is another diagram illustrating operation of the molding system in FIG. 1 (Operation Example 2).
FIG. 8 is a diagram illustrating operation of a molding system in the past.
FIG. 9 is a front view of a molding system according to a second embodiment of the present invention.
FIG. 10 is a diagram illustrating operation of the molding system in FIG. 9 (Operation Example 3).
FIG. 11 is a plan view schematically illustrating positional relationship between fixed-side molds on a rotary table and a nozzle of an injection device in the molding system in FIG. 9.

### DETAILED DESCRIPTION OF THE INVENTION

### First Embodiment

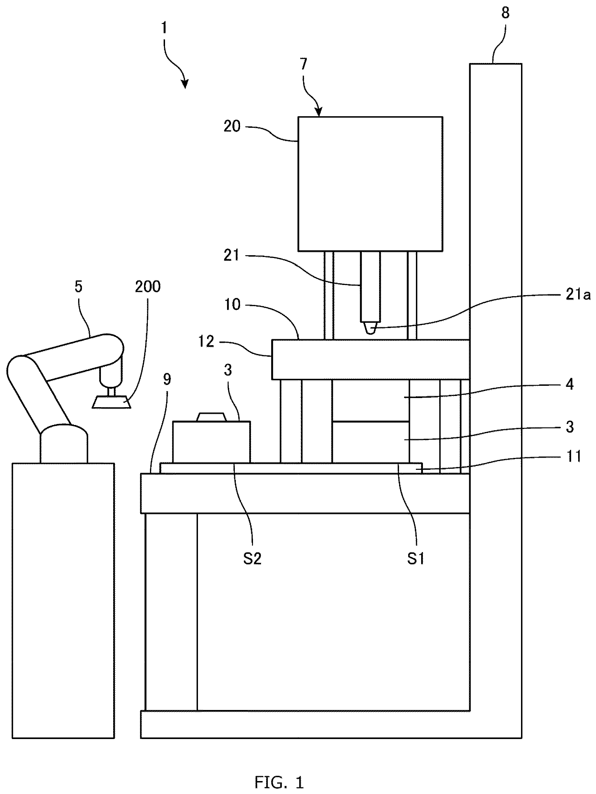

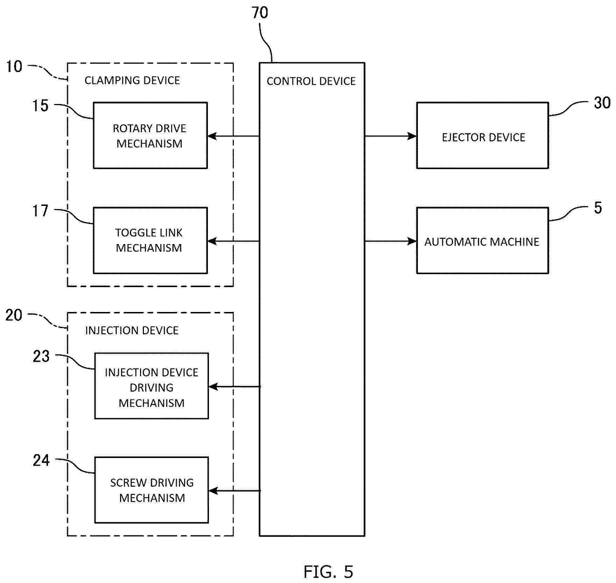

A description is given below to a molding system according to the first embodiment of the present invention with reference to FIGs. 1 through 8.

A molding system 1 according to the present embodiment is used for manufacturing a product 200 as a molded article by injecting and filling a resin in a cavity C formed by a fixed-side mold 3 and a movable-side mold 4.

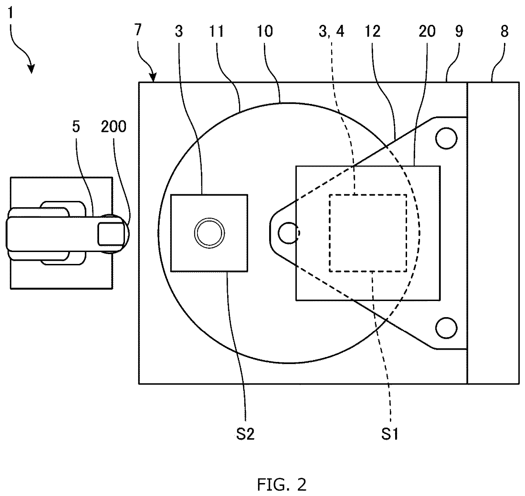

As illustrated in FIGs. 1 and 2, the molding system 1 has an automatic machine 5 and an injection molding machine 7.

The automatic machine 5 has a conveyor arm and is used for moving the product 200. The automatic machine 5 is arranged near the injection molding machine 7.

The injection molding machine 7 opens and closes the fixed-side mold 3 and the movable-side mold 4 in an up-down direction and injects a resin downward from above (vertical clamping, vertical injection). The injection molding machine 7 has a clamping device 10, an injection device 20, an ejector device 30, and a control device 70.

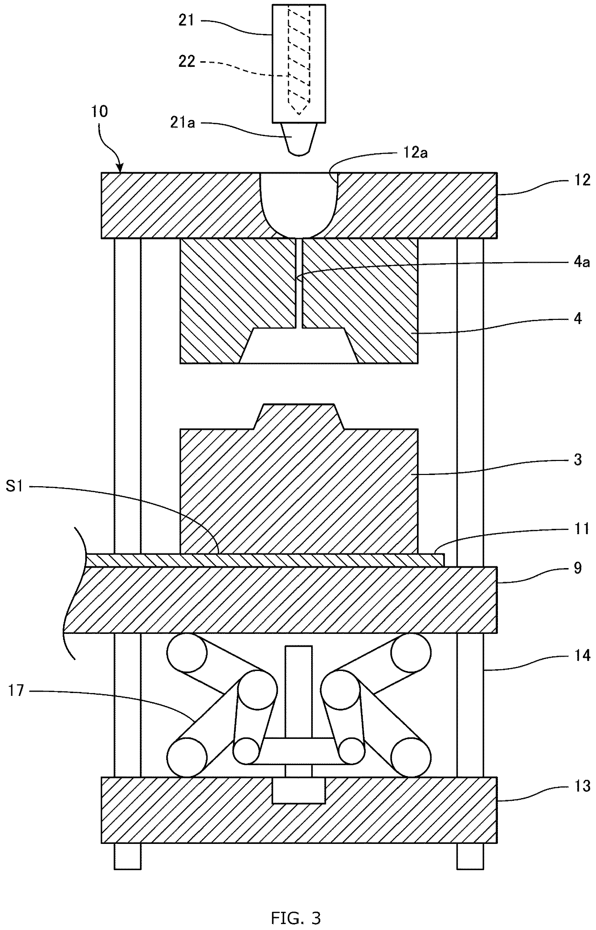

As illustrated in FIGs. 3 through 5, the clamping device 10 has a rotary table 11, a movable die plate 12, a tailstock 13, a plurality of tie bars 14, a rotary drive mechanism 15, and a toggle link mechanism 17.

The rotary table 11 has a disk shape and is arranged horizontally and rotatably on a base 9 supported by a frame 8. To the rotary table 11, two fixed-side molds 3 are attached at intervals of 180 degrees. The rotary table 11 is rotated by the rotary drive mechanism 15 and positions the two fixed-side molds 3 alternately at a first station S1 (right position in FIGs. 1 and 2) and a second station S2 (left position in FIGs. 1 and 2). The base 9 and the rotary table 11 form a fixed die plate.

The first station S1 is an injection position for clamping the fixed-side mold 3 and the movable-side mold 4 and injecting and filling a plasticized resin in the cavity C. The second station S2 is a molded article ejection position for ejecting the product 200 from the fixed-side mold 3.

The movable die plate 12 is arranged above the rotary table 11. The movable die plate 12 is movable in the up-down direction. The up-down direction is a direction of clamping. The movable die plate 12 is provided with a through hole 12a.

To the movable die plate 12, the movable-side mold 4 is attached. The movable-side mold 4 is provided with a resin passage 4a (sprue, runners, gates) in communication with the cavity C. The movable-side mold 4 faces the fixed-side mold 3 positioned at the first station S1 in the up-down direction. The fixed-side mold 3 is a first mold, and the movable-side mold 4 is a second mold.

The tailstock 13 is arranged below the base 9 movably in the up-down direction. The plurality of tie bars 14 extend in the up-down direction passing through the base 9 and couple the tailstock 13 to the movable die plate 12.

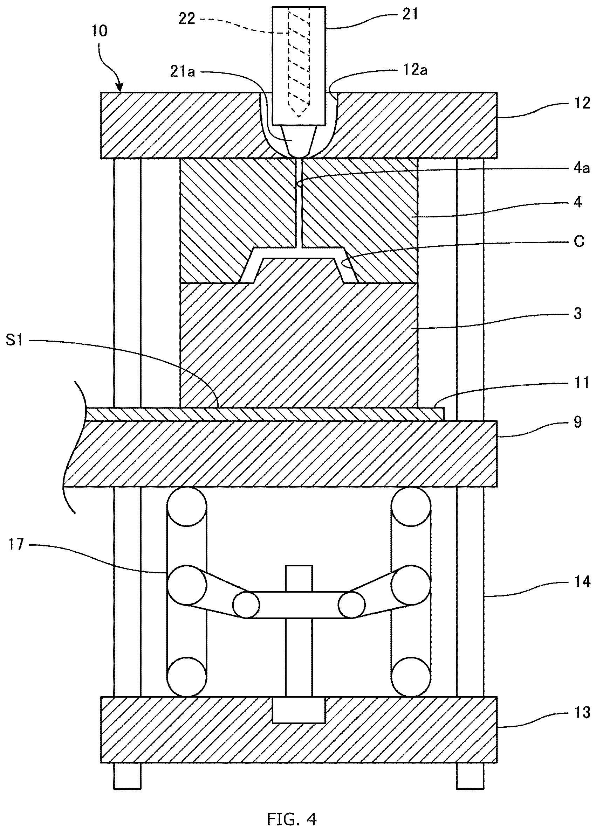

The toggle link mechanism 17 is arranged between the base 9 and the tailstock 13. The toggle link mechanism 17 bends as illustrated in FIG. 3 and extends as illustrated in FIG. 4.

Bending of the toggle link mechanism 17 increases the interval between the rotary table 11 and the movable die plate 12, causing the movable-side mold 4 to move away from the fixed-side mold 3 and the fixed-side mold 3 and the movable-side mold 4 to be in an open state (mold open state).

Extension of the toggle link mechanism 17 reduces the interval between the rotary table 11 and the movable die plate 12, causing the movable-side mold 4 to be in contact with the fixed-side mold 3 and the fixed-side mold 3 and the movable-side mold 4 to be in a closed state (mold closing state). Then, when the extension of the toggle link mechanism 17 is completed, the fixed-side mold 3 and the movable-side mold 4 are clamped with a predetermined clamping force (clamped state).

The injection device 20 is arranged above the movable die plate 12. The injection device 20 has a cylinder 21, a screw 22, an injection device driving mechanism 23, and a screw driving mechanism 24.

The cylinder 21 has a cylindrical shape and has an outer circumferential surface arranged with a heater, not shown. The cylinder 21 heats the resin. The cylinder 21 is provided with a nozzle 21a at a distal end (lower end). The nozzle 21a is inserted into the through hole 12a of the movable die plate 12 to be in contact with the movable-side mold 4 (nozzle touch) and connected to the resin passage 4a of the movable-side mold 4. The resin plasticized in the cylinder 21 flows through the nozzle 21a and the resin passage 4a into the cavity C.

The screw 22 is arranged inside the cylinder 21. The screw 22 is rotatable and movable in the up-down direction.

The injection device driving mechanism 23 causes the injection device 20 to move in the up-down direction relative to the movable die plate 12. With the movement of the injection device 20 in the up-down direction, the nozzle 21a moves to be separated from and in contact with the movable-side mold 4. The screw driving mechanism 24 causes the screw 22 to rotate and move in the up-down direction in the cylinder 21. The movement of the injection device 20 and the screw 22 in a direction close to the movable-side mold 4 (downward) is referred to as "forward movement", and the movement in a direction away from the movable-side mold 4 (upward) is referred to as "backward movement".

The ejector device 30 causes an ejector pin, not shown, provided in the fixed-side mold 3 to move in the up-down direction. When the ejector pin projects from the outer surface of the fixed-side mold 3, the product 200 is separated from the fixed-side mold 3. The movement of the ejector pin in a direction projecting from the outer surface of the fixed-side mold 3 (upward) is referred to as "forward movement", and the movement of the ejector pin in a direction to be stored in the fixed-side mold 3 (downward) is referred to as "backward movement". The automatic machine 5 causes the product 200 separated from the fixed-side mold 3 to move to a predetermined location.

The control device 70 manages the entire operation of the molding system 1. The control device 70 has a microcomputer and a storage section. The control device 70 controls the automatic machine 5, the clamping device 10 (the rotary drive mechanism 15, the toggle link mechanism 17), the injection device 20 (the injection device driving mechanism 23, the screw driving mechanism 24), and the ejector device 30.

### Operation Example 1

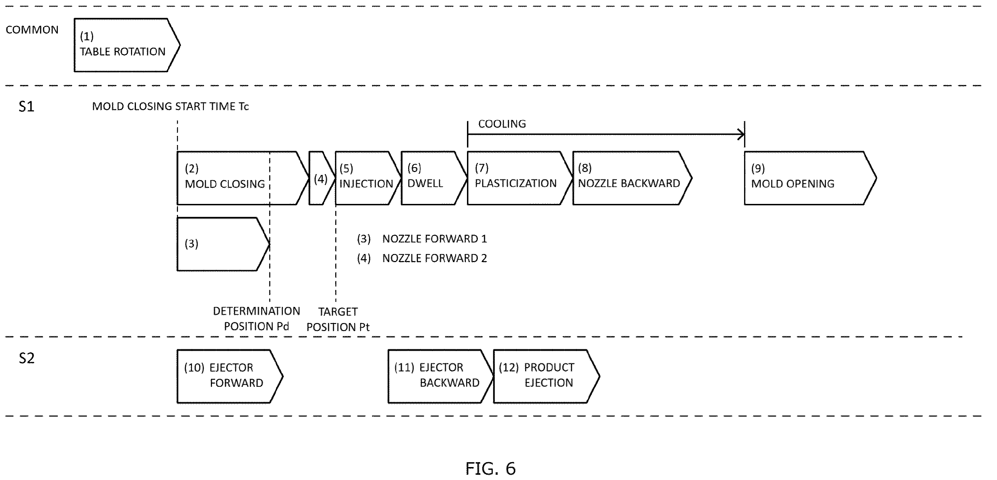

An operation example (Operation Example 1) of molding the product 200 in the molding system 1 is described with reference to FIG. 6.

The storage section of the control device 70 stores a target position Pt and a determination position Pd used for moving the injection device 20 forward (nozzle forward) in molding operation. The target position Pt is a position where the nozzle 21a is in contact with the movable-side mold 4. The determination position Pd is closer to the original position before start moving forward than (at the rear of) the target position Pt. The determination position Pd is set considering deformation of the movable-side mold 4 and the movable die plate 12 due to heating and the like. For example, if the determination position Pd is 5 mm rearward of the target position Pt, "5 mm" is set to the determination position Pd. The value to be set to the determination position Pd is allowed to be changed by an operator.

Operation Example 1 includes Operations (1) through (12) described below. Operations (1) through (12) are performed in one molding cycle. Operation (1) is operation common to the first station S1 and the second station S2. Operations (2) through (9) are operation at the first station S1. Operations (10) through (12) are operation at the second station S2.

### (1) "Table Rotation"

Confirming that the toggle link mechanism 17 bends and the fixed-side mold 3 positioned at the first station S1 and the movable-side mold 4 are in the mold open state, the control device 70 causes the rotary table 11 to rotate 180 degrees. Thus, one of the fixed-side molds 3 moves from the first station S1 to the second station S2, and the other fixed-side mold 3 moves from the second station S2 to the first station S1. On the fixed-side mold 3 moved from the first station S1 to the second station S2, the product 200 is placed.

### (2) "Mold Closing"

When the fixed-side mold 3 is positioned at the first station S1, the control device 70 starts extending the toggle link mechanism 17. The time of starting extension of the toggle link mechanism 17 is defined as a mold closing start time Tc.

### (3) "Nozzle Forward 1"

The control device 70 starts forward movement of the injection device 20 at the mold closing start time Tc. When the injection device 20 moves forward and reaches the determination position Pd, the control device 70 determines whether the fixed-side mold 3 and the movable-side mold 4 are in the mold closing state. In the present Operation Example, since the molds 3 and 4 are not in the mold closing state at the time of determination, the control device 70 stops the forward movement of the injection device 20 and monitors the state of the fixed-side mold 3 and the movable-side mold 4. It should be noted that, if the molds 3 and 4 are in the mold closing state at this time of determination, the control device 70 proceeds to Operation (4) without stopping the forward movement of the injection device 20 and causes the injection device 20 to move forward to the target position Pt. The control device 70 may determine whether the fixed-side mold 3 and the movable-side mold 4 are in the clamped state, instead of the mold closing state. That is, the control device 70 may determine the clamped state as a state where the fixed-side mold 3 and the movable-side mold 4 are closed.

### (4) "Nozzle Forward 2"

When the fixed-side mold 3 and the movable-side mold 4 are in the mold closing state, the control device 70 restarts the forward movement of the injection device 20 and causes the injection device 20 to move forward to the target position Pt. Thus, the nozzle 21a of the injection device 20 is in contact with the movable-side mold 4 and connected to the resin passage 4a. In addition, the fixed-side mold 3 and the movable-side mold 4 are in the clamped state.

### (5) "Injection"

The control device 70 causes the screw 22 to move forward and injects the plasticized resin in the cylinder 21 into the cavity C.

### (6) "Dwell"

The control device 70 controls the position of the screw 22 in a front-rear direction so as to apply a predetermined pressure (dwell pressure) to the resin filled in the cavity C.

### (7) "Plasticization"

When the resin in the resin passage 4a (gate) is hardened, the control device 70 causes the screw 22 to rotate for plasticizing the resin while feeding the resin to a front portion of the cylinder 21. This causes the screw 22 to move backward.

### (8) "Nozzle Backward"

The control device 70 causes the injection device 20 to move backward to a predetermined backward position. Thus, the nozzle 21a is separated from the movable-side mold 4.

### (9) "Mold Opening"

When a predetermined cooling time has elapsed after completion of Operation (6) "Dwell", the control device 70 starts bending of the toggle link mechanism 17. This causes the movable-side mold 4 to be separated from the fixed-side mold 3, and when the bending of the toggle link mechanism 17 is completed, the fixed-side mold 3 and the movable-side mold 4 are in the mold open state and thus the operation at the first station S1 is completed.

### (10) "Ejector Forward"

When the fixed-side mold 3 on which the product 200 is placed is positioned at the second station S2, the control device 70 causes the ejector pin (not shown) to project (move forward) from the outer surface of the fixed-side mold 3 and thus to separate the product 200 from the fixed-side mold 3.

### (11) "Ejector Backward"

The control device 70 causes the ejector pin to be stored (moved backward) in the fixed-side mold 3.

### (12) "Product Ejection"

The control device 70 causes the product 200 separated from the fixed-side mold 3 by the automatic machine 5 to move to a predetermined location. When the movement of the product 200 is completed, the operation at the second station S2 is completed.

When Operations (2) through (9) at the first station S1 and Operations (10) through (12) at the second station S2 are both completed, the control device 70 returns to Operation (1) and from then on repeats Operations (1) through (12) described above.

### Operation Example 2

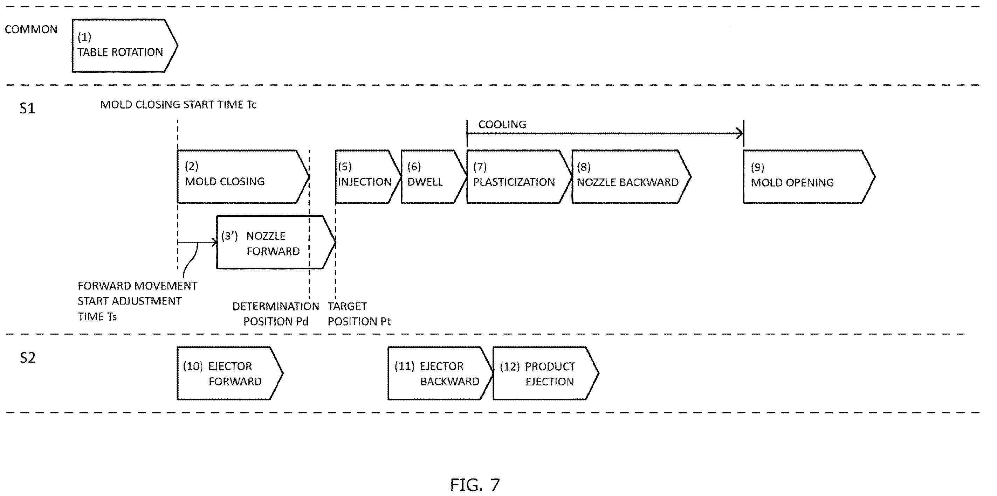

Another operation example (Operation Example 2) of molding the product 200 in the molding system 1 is described with reference to FIG. 7.

The storage section of the control device 70 stores a forward movement start adjustment time Ts in addition to the target position Pt and the determination position Pd. The forward movement start adjustment time Ts is time to adjust the time of starting forward movement of the injection device 20 with reference (Time 0) to the mold closing start time Tc. For example, for starting forward movement of the injection device 20 five seconds after the mold closing start time Tc, "5 seconds" is set to the forward movement start adjustment time Ts. For starting forward movement of the injection device 20 two seconds before the mold closing start time Tc, "-2 seconds" is set to the forward movement start adjustment time Ts. The value to be set to the forward movement start adjustment time Ts is allowed to be changed by an operator.

Operation Example 2 is the same as Operation Example 1 except for including Operation (3') "Nozzle Forward" instead of Operation (3) "Nozzle Forward 1" and Operation (4) "Nozzle Forward 2" described above. That is, Operation Example 2 includes Operations (1), (2), (3'), and (5) through (12). In Operation Example 2, only the operation different from Operation Example 1 (Operation (3')) is described.

### (3') "Nozzle Forward"

The control device 70 starts forward movement of the injection device 20 at the time obtained from the mold closing start time Tc and the forward movement start adjustment time Ts. When the injection device 20 moves forward and reaches the determination position Pd, the control device 70 determines whether the fixed-side mold 3 and the movable-side mold 4 are in the mold closing state. In the present Operation Example, since the molds 3 and 4 are in the mold closing state at the time of determination, the control device 70 causes the injection device 20 to move forward to the target position Pt without stopping the forward movement of the injection device 20. Thus, the nozzle 21a of the injection device 20 is in contact with the movable-side mold 4 and connected to the resin passage 4a of the movable-side mold 4. In addition, the fixed-side mold 3 and the movable-side mold 4 are in the clamped state. It should be noted that, if the molds 3 and 4 are not in the mold closing state at this time of determination, the control device 70 performs Operations (3) and (4) described above in the same manner as Operation Example 1. The control device 70 may determine whether the fixed-side mold 3 and the movable-side mold 4 are in the clamped state, instead of the mold closing state.

### Operation Example in the Past

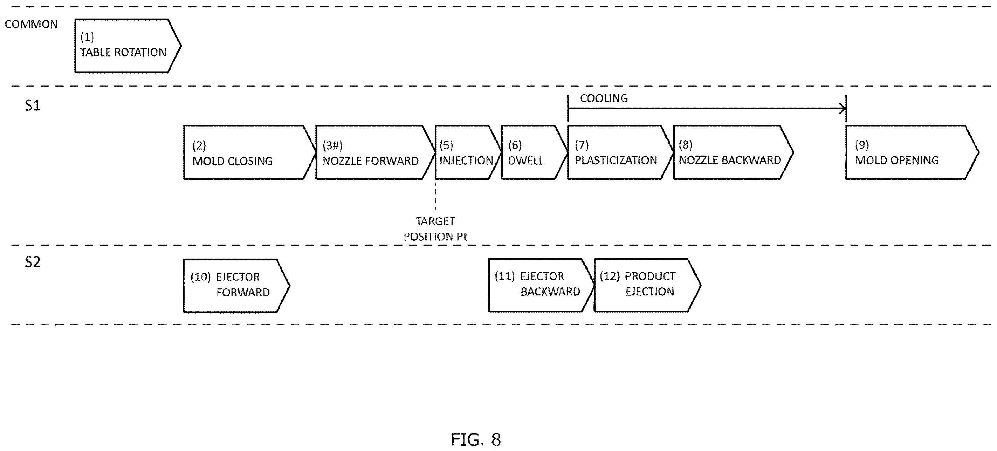

FIG. 8 illustrates an operation example in the past (Past Operation Example) of molding the product 200 in the molding system 1. Past Operation Example is the same as Operation Example 1 except for including Operation (3#) "Nozzle Forward" instead of Operation (3) "Nozzle Forward 1" and Operation (4) "Nozzle Forward 2" described above.

In Past Operation Example, Operation (3#) "Nozzle Forward" is started after Operation (2) "Mold Closing" is completed. In Operation (3#), the control device 70 causes the injection device 20 to move forward to the target position Pt without determining whether the fixed-side mold 3 and the movable-side mold 4 are in the mold closing state. Accordingly, in Past Operation Example, the operation of closing the fixed-side mold 3 and the movable-side mold 4 and the operation of moving the injection device 20 forward are performed in order, and thus Past Operation Example takes more time for molding operation compared with Operation Examples 1 and 2 where these operations are performed in parallel.

As just described, the injection molding machine 7 in the molding system 1 includes: the clamping device 10 configured to clamp the fixed-side mold 3 and the movable-side mold 4; the injection device 20 having the cylinder 21 provided with the nozzle 21a to be in contact with or separate from the movable-side mold 4; and the control device 70 configured to control the clamping device 10 and the injection device 20. In the operation of molding the product 200, the control device 70 causes the injection device 20 to move forward toward the target position Pt where the nozzle 21a is in contact with the movable-side mold 4. The control device 70 determines whether the fixed-side mold 3 and the movable-side mold 4 are closed (in the mold closing state) when the injection device 20 moves forward to the determination position Pd at the rear of the target position Pt. If the fixed-side mold 3 and the movable-side mold 4 are closed, the control device 70 causes the injection device 20 to move further forward to the target position Pt. If the fixed-side mold 3 and the movable-side mold 4 are not closed, the control device 70 stops the forward movement of the injection device 20 and causes the injection device 20 to move further forward to the target position Pt after the fixed-side mold 3 and the movable-side mold 4 are closed.

Such a configuration allows inhibition of the nozzle 21a to be in contact with the fixed-side mold 3 before the fixed-side mold 3 and the movable-side mold 4 are closed while the operation of closing the fixed-side mold 3 and the movable-side mold 4 and the operation of moving the injection device 20 forward are performed in parallel. It is thus possible to reduce the molding cycle and also more securely inhibit nozzle touch before the fixed-side mold 3 and the movable-side mold 4 are closed.

In addition, in Operation Example 2, the storage section of the control device 70 is configured to store the forward movement start adjustment time Ts. The control device 70 starts forward movement of the injection device 20 based on the mold closing start time Tc of starting the operation of closing the fixed-side mold 3 and the movable-side mold 4 and the forward movement start adjustment time Ts. In such a configuration, by adjusting the determination position Pd and the forward movement start adjustment time Ts, it is possible to optimize the relationship between the operation of closing the fixed-side mold 3 and the movable-side mold 4 and the operation of moving the injection device 20 forward and thus to reduce the molding cycle even more.

### Second Embodiment

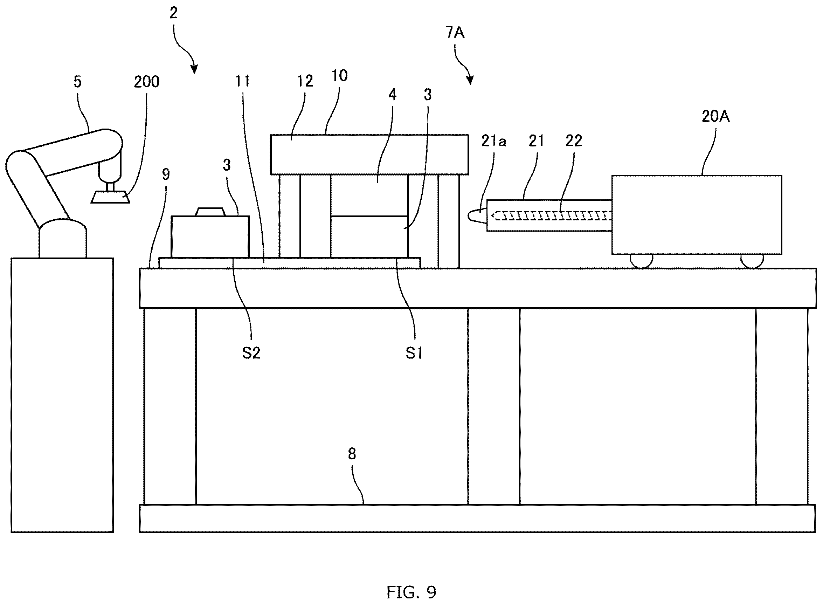

A description is given below to a molding system according to the second embodiment of the present invention with reference to FIGs. 9 through 11.

A molding system 2 according to the present embodiment is used for, in the same manner as the molding system 1 described above, manufacturing the product 200 as a molded article by injecting and filling a resin in the cavity C formed by the fixed-side mold 3 and the movable-side mold 4. In the description below, the same reference signs are given to the same components (including substantially same components) as those in the molding system 1 to omit detailed descriptions.

As illustrated in FIG. 9, the molding system 2 has the automatic machine 5 and an injection molding machine 7A.

The injection molding machine 7A opens and closes the fixed-side mold 3 and the movable-side mold 4 in the up-down direction and injects a resin from right to left in FIG. 9 (vertical clamping, horizontal injection). The injection molding machine 7A has the clamping device 10, an injection device 20A, the ejector device 30, and the control device 70.

The injection device 20A is arranged above the base 9 and is movable in the lateral direction (horizontal direction) in FIG. 9. The injection device 20A has the cylinder 21, the screw 22, the injection device driving mechanism 23, and the screw driving mechanism 24.

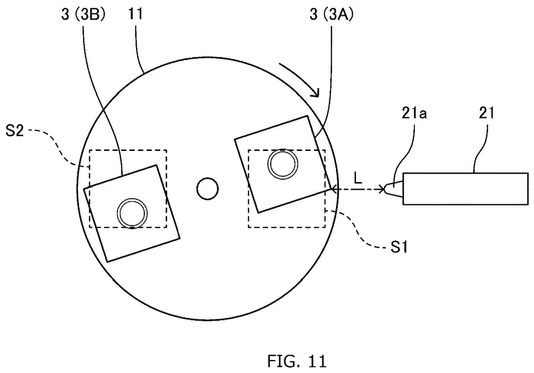

The injection device driving mechanism 23 causes the injection device 20A to move in the lateral direction. With the movement of the injection device 20A in the lateral direction, the nozzle 21a moves to be separated from and in contact with the fixed-side mold 3 and the movable-side mold 4. The movement of the injection device 20A in a direction close to the fixed-side mold 3 (to the left in FIGs. 9 and 11) is referred to as "forward movement", and the movement in a direction away from the fixed-side mold 3 (to the right in FIGs. 9 and 11) is referred to as "backward movement".

The injection molding machine 7A has the same configuration (including substantially same configuration) as the injection molding machine 7 described above except for having the injection device 20A configured to inject in the lateral direction, instead of the injection device 20 configured to inject in the vertical direction.

### Operation Example 3

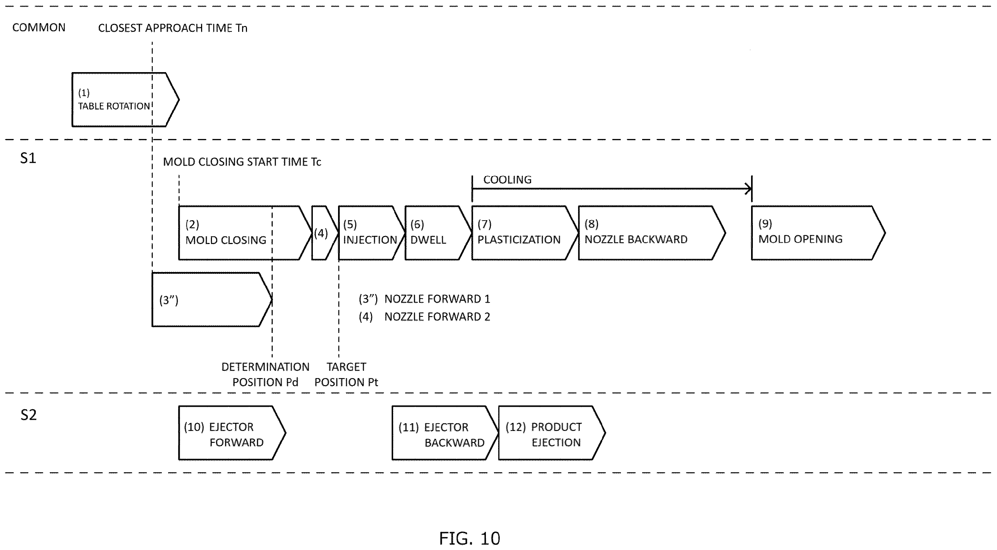

An operation example (Operation Example 3) of molding the product 200 in the molding system 2 is described with reference to FIGs. 10 and 11.

The storage section of the control device 70 stores a closest approach time Tn in addition to the target position Pt and the determination position Pd. In the present embodiment, the target position Pt is the position where the nozzle 21a is in contact with the fixed-side mold 3 and the movable-side mold 4. The closest approach time Tn is the time when rotation of the rotary table 11 causes the fixed-side mold 3 being moved toward the first station S1 to become closest to the nozzle 21a of the injection device 20A. The closest approach time Tn is set with reference (Time 0) to, for example, the time of starting the rotation of the rotary table 11.

In the present embodiment, when a corner of the fixed-side mold 3 with a rectangular shape in plan view passes in front of the nozzle 21a, a distance L between the fixed-side mold 3 and the nozzle 21a becomes shortest and thus the fixed-side mold 3 becomes closest to the nozzle 21a of the injection device 20A. FIG. 11 schematically illustrates positional relationship between the fixed-side molds 3 (3A and 3B) on the rotary table 11 and the nozzle 21a of the injection device 20A in the molding system 2. In FIG. 11, the rotary table 11 rotates clockwise, the fixed-side mold 3A moves toward the first station S1, and the fixed-side mold 3B moves toward the second station S2. FIG. 11 illustrates the state in which the distance L between the fixed-side mold 3A and the nozzle 21a is shortest.

Operation Example 3 is the same as Operation Example 1 except for including Operation (3") "Nozzle Forward 1" instead of Operation (3) "Nozzle Forward 1" described above. That is, Operation Example 3 includes Operations (1), (2), (3"), and (4) through (12). In Operation Example 3, only the operation different from Operation Example 1 (Operation (3")) is described.

### (3") "Nozzle Forward 1"

The control device 70 starts forward movement of the injection device 20A at the closest approach time Tn. When the injection device 20A moves forward and reaches the determination position Pd, the control device 70 determines whether the fixed-side mold 3 and the movable-side mold 4 are in the mold closing state. In the present Operation Example, since the molds 3 and 4 are not in the mold closing state at the time of determination, the control device 70 stops the forward movement of the injection device 20A and monitors the state of the fixed-side mold 3 and the movable-side mold 4. It should be noted that, if the molds 3 and 4 are in the mold closing state at this time of determination, the control device 70 proceeds to Operation (4) without stopping the forward movement of the injection device 20A and causes the injection device 20A to move forward to the target position Pt. The control device 70 may determine whether the fixed-side mold 3 and the movable-side mold 4 are in the clamped state, instead of the mold closing state.

The molding system 2 exhibits the same actions and effects as those of the molding system 1.

In addition, in the molding system 2, the injection device 20A moves forward and backward in the horizontal direction. The clamping device 10 has the rotary table 11 equipped with the plurality of fixed-side molds 3 and positioning the plurality of fixed-side molds 3 in order at the first station S1 to be clamped together with the movable-side mold 4 in the up-down direction (vertical direction) by intermittent rotation. The control device 70 causes the rotary table 11 to rotate to cause the plurality of fixed-side molds 3 to move, in order, to the first station S1 to be clamped together with the movable-side mold 4. The control device 70 starts forward movement of the injection device 20A when the fixed-side mold 3 being moved toward the first station S1 reaches closest to the nozzle 21a. Such a configuration causes the control device 70 to start forward movement of the injection device 20A after the fixed-side mold 3 being moved toward the first station S1 passes the position most likely to collide with the nozzle 21a. It is thus possible to start forward movement of the injection device 20A at an earlier time while inhibiting collision of the fixed-side mold 3 during movement with the nozzle 21a.

It should be noted that, in the molding system 2, the control device 70 may start forward movement of the injection device 20A when, instead of the closest approach time Tn, the fixed-side mold 3 (3A) being moved toward the first station S1 becomes close to the first station S1 and the rotary table 11 starts decreasing rotational speed.

The molding systems 1 and 2 are configured to arrange the fixed-side molds 3 on the rotary table 11. Instead of the rotary table 11, a sliding table, for example, configured to slide in the left-right direction in FIG. 1 may be provided to arrange the fixed-side molds 3 on the sliding table and to position the fixed-side molds 3 at the first station S1 and the second station S2, or as another example, a fixed die plate facing the movable die plate 12 in the up-down direction may be provided to arrange the fixed-side mold 3 on the fixed die plate and to cause the fixed-side mold 3 to typically face the movable-side mold 4 in the up-down direction.

Although the molding systems 1 and 2 are configured to open and close the fixed-side mold 3 and the movable-side mold 4 in the up-down direction, the fixed-side mold 3 and the movable-side mold 4 may be opened and closed in the lateral direction (lateral clamping).

The above description has been given to some embodiments of the present invention, but embodiments of the present invention are not limited to these examples. The scope of the present invention also includes the embodiments described above appropriately subjected to addition, cancellation, design change of any of the components by those skilled in the art and appropriate combinations of the features of the embodiments as long as not departing from the spirit of the present invention.

## Claims

1. An injection molding machine, comprising:
a clamping device configured to clamp a first mold and a second mold;
an injection device having a cylinder provided with a nozzle to be in contact with or separate from at least one mold of the first mold or the second mold; and
a control device configured to control the clamping device and the injection device, wherein the control device, in molding operation,
causes the injection device to move forward toward a target position where the nozzle is in contact with the mold,
determines whether the first mold and the second mold are closed when the injection device moves forward to a determination position at rear of the target position, and,
(i) if the first mold and the second mold are closed, causes the injection device to move further forward to the target position and,
(ii) if the first mold and the second mold are not closed, stops forward movement of the injection device and causes the injection device to move further forward to the target position after the first mold and the second mold are closed.

2. The injection molding machine according to Claim 1, wherein the control device
has a storage section configured to store a forward movement start adjustment time
and
starts forward movement of the injection device based on a time of starting operation of closing the first mold and the second mold and the forward movement start adjustment time.

3. The injection molding machine according to Claim 1, wherein
the injection device moves forward and backward in a horizontal direction,
the clamping device has a rotary table equipped with a plurality of the first molds and positioning the plurality of first molds in order at a station to be clamped together with the second mold in a vertical direction by intermittent rotation, and
the control device
causes the rotary table to rotate to cause the plurality of first molds to move, in order, to the station to be clamped together with the second mold and
starts forward movement of the injection device when the first mold being moved toward the station reaches closest to the nozzle.

4. The injection molding machine according to Claim 1, wherein
the injection device moves forward and backward in a horizontal direction,
the clamping device has a rotary table equipped with a plurality of the first molds and positioning the plurality of first molds in order at a station to be clamped together with the second mold in a vertical direction by intermittent rotation, and
the control device
causes the rotary table to rotate to cause the plurality of first molds to move, in order, to the station to be clamped together with the second mold and
starts forward movement of the injection device when the first mold being moved toward the station becomes close to the station and the rotary table starts decreasing rotational speed.

5. A method of controlling an injection molding machine having a clamping device configured to clamp a first mold and a second mold and an injection device having a cylinder provided with a nozzle to be in contact with or separate from at least one mold of the first mold or the second mold, wherein the method comprises, in molding operation,
causing the injection device to move forward toward a target position where the nozzle is in contact with the mold, and
when the injection device moves forward to a determination position at rear of the target position,
(i) if the first mold and the second mold are closed, causing the injection device to move further forward to the target position and,
(ii) if the first mold and the second mold are not closed, stopping forward movement of the injection device and causing the injection device to move further forward to the target position after the first mold and the second mold are closed.
